# EUROPEAN PATENT APPLICATION

(11) **EP 2 719 905 A1**
(43) Date of publication of application: **16.04.2014**
(21) Application number: 13181761.1
(22) Date of filing: 27.08.2013
(51) Int. Cl.: F16B 7/10

(54) **Connector for axial position adjusting and retaining of modular elements of telescopic poles and telescopic pole provided with such a connector**

(30) Priority: 11.10.2012 IT TO20120891
(71) Applicant: Fizan S.r.l., 36027 Rosa (VI) (IT)
(72) Inventor: Zaltron, Andrea, 36061 Bassano del Grappa (IT)
(74) Representative: Contadin, Giorgio

(57) **Abstract**

A connector (1) for axial position adjusting and retaining of modular elements (51, 52) of telescopic poles (50) especially suitable for practicing sports, leisure activities and the like, wherein the modular elements (51, 52) are slidingly and telescopically coupled each other in such a way that a second modular element (52) protrudes axially from a first end (51a) of a first modular element (51) adjacent to it, the connector (1) including a tubular reference body (2) defining a linear symmetry axis (Y) and suitable to be fixed to the first end (51a) of the first modular element (51), elastically yielding means (3), associated with the tubular reference body (2) and suitable to protrude from the first end (51a) of the first modular element (51), and an outer slider (4) operable by the user, which is made movable axially along the first modular element (51) and cooperates with the elastically yielding means (3) in order to place them between a working position, in which the elastically yielding means (3) are compressed by the outer slider (4) in such a way as to block the movement of the second modular element (52) with respect to the first modular element (51), and a rest position, in which the elastically yielding means (3) are released from the outer slider (4) and the second modular element (52) is free to slide with respect to the second modular element (51). In particular, the connector (1) comprises blocking means (5) associated at least in part to the tubular reference body (2) which limit or prevent the relative rotation of the tubular reference body (2) with respect to the outer slider (4) around the linear symmetry axis (Y) when the outer slider (4) places the elastically yielding means (3) in the working position, thus firmly keeping the modular elements (51, 52) in the position reached.

## Description

The invention herein relates to a connector for axial position adjusting and retaining of, generally tubular, modular elements of telescopic poles used in particular for practicing sports, leisure time and similar.

The present invention relates also to a telescopic pole provided with a similar connector and particularly suitable for practicing sports (such as downhill skiing, cross country skiing, freestyle skiing - so-called "free styling" - ski touring), leisure time activities (such as trekking, "Nordic Walking"), fitness and/or wellness activities with invigorating-therapeutic purposes, relax activities or for simply completing walks or similar.

This does not exclude, however, that the connector and the telescopic pole of the present invention may be intended for other uses such as, for example, carrying out of household activities, where they form extendable brooms for cleaning narrow, or difficult to be accessed, cornerd of the premises of the housing unit.

In particular, the solution according to the invention fits especially but not exclusively in the field of sports equipment for activities not only outdoors but also in gyms, and precisely it relates to a connector for axial position adjusting and retaining of two modular elements of telescopic poles for alpine skiing, cross country skiing, ski touring, freestyle skiing, walking, trekking or Nordic walking.

Even more in detail, the present invention relates to a connector for axial position adjusting and retaining of two, usually tubular, modular elements of telescopic poles particularly suitable for practicing sports, leisure or the like, provided with an elastic structure made in one piece.

Notoriously, in practicing outdoors some sports activities, leisure or hiking it is useful if not essential for the user to make use of a pair of telescopic poles to be handled with the hands at a top knob, for instance as support and balance for the own body in positions of unstable equilibrium or along rough routes that make impossible or at least difficult for the user himself to keep a substantially upright posture.

Even in other situations, such as the need to access corners of the ceiling of the premises of a building or spaces in high places of a containment wardrobe of clothing, it is often necessary to use a telescopic pole comprising an elongated handle ending, in these cases, with a plurality of bristles to form a broom or with a hook to form a coupling.

The telescopic poles concerned, especially those one for sports, leisure and similar, distinguished by their own weight and their own height, can be rented or lent, at different times, for different users, so it is often necessary to adjust the length thereof in order to make them suitable to be uses by users of different stature.

The adjustment of the length of the telescopic poles concerned, especially suitable for practicing sports, leisure and similar, is also necessary depending on of the fact that the user is walking downhill or uphill.

For the abovementioned reasons, telescopic poles in length adjustable (namely, height with respect to the structure to access) depending on the specific user's needs have been made available on the market for a long time.

Adjustment takes place using a variety of connection systems which allow, during use, to keep more or less firmly and effectively united, in the desired position, the modular elements - typically both tubular although in certain embodiments one of them may be also not tubular - of the telescopic poles.

Some of said connection systems of known type provide connectors comprising a plurality of elements which include a clamp, commonly provided with an elastic tubular element both by virtue of the material which it is made of and for the fact of having a lightening slit parallel to the longitudinal axis of the telescopic pole and defining two ends; the clamp also includes a screw which connects those ends of the slit.

By tightening the screw, the ends of the slit approach each other, cancelling the slit and - therefore - increasing the seal on the two (tubular or non-tubular) modular elements to be connected, while, conversely, by loosening the screw, the ends move away each other restoring the slit.

The screw provides semicircular lever-shaped gripping means, in such a way as to be easy to be handled during the rotary movement; the screw is then tightened around the tubular element, further increasing the locking tightness on it.

In any case, the connectors of the prior art disadvantageously have a very complex and articulated constructive conception, which it must possess the necessary elasticity in order to return from the sealing position to the release position and vice versa, so as to adjust the length of the telescopic pole whenever necessary.

This constructive complexity reflects, although to a limit extent, in a more laborious manufacturing and in a more articulated factory management, just for providing a still high number of components (and related article codes), and, consequently, in a at least longer assembly of the various components.

Another drawback of the prior art is related to the fact that the operative interaction among the various pieces forming the known connectors involves a continuous friction among them, with the negative consequence that over time, under continuous use, these pieces are subject to wear if not to failure.

An additional drawback of the known solutions of the connectors concerned is determined by the fact that the plurality of pieces that compose them, besides increasing the weight, sometimes causes over time maddening vibrations during use.

Another drawback of the prior art derives from the fact that the operations of maintenance of the known connectors are rather laborious, since they necessarily provide to remove and separate all the removable components; moreover, in a similar situation, it is also possible that one of the components goes irretrievably lost.

In addition, by realizing a greater number of pieces, the permissible errors in the dimensions of the latter add together, and it is possible that this makes necessary the use of two tubular modular elements having a diameter difference even of a few millimetres.

In this case, the difference in diameter among the modular elements is so marked as to make the telescopic poles, using connectors of known type, practically unsuitable for those applications where it is necessary to lift them in order to access positions above, for example during cleaning of the ceiling of a building room, or place them on the ground in order to support the user's weight, for example, during the practice of sports, leisure and similar, which was mentioned before.

A last but not least drawback suffered in particular by the more technologically advanced telescopic poles for sports and leisure time and, above all, by the telescopic poles for uses that do not require load-bearing capacity (such as the cleaning of the ceiling by operating from the floor) of the current status of the art, is related to the possible irretrievable loss of functionality of the connectors as a result of excessive operating force exerted on them by the user.

Indeed, the known connectors include a fixed part (or tubular reference body), which is firmly coupled with one of the modular elements of the poles by means of gluing means, and a movable adjustment member (such as a cursor), externally cooperating with the fixed part and which is rotated by the user in a clockwise and counterclockwise (or vice versa) in order to arrange the connectors respectively in the retention and release position of the modular elements of the telescopic pole.

It often happens that if the user exerts an excessive force on the movable adjustment member while, turning it on the fixed part, he places it in the retention position of the modular elements of the telescopic pole, accidentally cuts off the fixed part from the modular element which was coupled with, with inevitable and irretrievable loss of functionality of the connector and its consequent need for repair and/or replacement.

Prior art documents FR2798613 A1 and US4922577 A show connecting devices of tubular elements for telescopic poles which are adjustable in length in order to be used, respectively, during sports activities such as skiing, walking or even in other situations and as tools in order to perform cleaning or painting/coating works in points arranged at a certain height from the ground or floor; in these documents no mention is made to the fact that the locking means prevent the relative rotation of the reference body with respect to the movable outer slider when the latter places the elastically yielding means in the working position with which the tubular modular elements are stably kept in the coupling position reached.

In particular, prior art document FR 2798613 A1 provides that the pins in the inner wall of a ring fixed to the outer tube are coupled in the holes made in the outer tube in such a manner that the longitudinal lights made respectively on the fixed ring and on the outer tube are perfectly aligned, mating or matching each other along a direction parallel to the linear axis of the pole.

In essence then, the pins and the holes have a function of purely guide rather than of locking and are therefore not able to effectively prevent or counteract the relative rotation of the fixed ring with respect to the movable ring (or cursor) when the latter places the elastically yielding means in the aforesaid working position, and this mostly when the user exerts an energetic action.

It should be, also, noted that in the connection device described in the document FR2798613 A1 of the prior art, when the user acts on the movable ring rotating it of a simple flat angle, the force exerted by concentric and progressive conical part of the mobile ring on the conical part of the ring fixed allows the outer tube, thanks to its flexibility given by the longitudinal light, to come into direct contact with the inner tube making rigid the assembly thus formed. In essence, then, in that document of the prior art the mechanical seal with which the elastically yielding means (when they take the working position) keep firmly coupled together the tubular modular elements of the telescopic pole is obtained due to the direct contact between the outer tube and the inner tube.

The present invention seeks to overcome the above mentioned drawbacks of the prior art.

In detail, main purpose of the present invention is to provide a connector for axial position adjusting and retaining of modular elements of telescopic poles particularly suitable for practicing sports, leisure and similar which includes a number of operating components lower than that one of the equivalent known technique.

Another purpose of the invention is to create a telescopic pole, particularly suitable for practicing sports, leisure or similar, which is originally and effectively provided with a similar connector.

Under these purposes, it is task of the present invention to favour obtaining economies of scale and, therefore, greater standardization and efficiency compared to the state of the art in the production of connectors for axial position adjusting and retaining of modular elements of telescopic poles particularly suitable for practicing sports, leisure and similar.

It is a second task of the invention to reduce with respect to the prior art the number of article codes which make up a connector for axial position adjusting and retaining of modular elements of telescopic poles particularly suitable for practicing sports, leisure and similar, simplifying stock management thereof.

It is a further purpose of the invention to minimize the possible deterioration due to wear and the risks of loss of the operative components of a connector for axial position adjusting and retaining of modular elements of telescopic poles particularly suitable for practicing sports, leisure and similar.

It is another task of the present invention to devise a telescopic pole particularly suitable for practicing sports, leisure and similar which, in the operating use configuration chosen for its modular elements, has a high mechanical seal or strength to the load applied by the user's body (such as a sportsman or a walk outdoors lover in his spare time), still adequate to the aforesaid types of use.

Yet another purpose of the invention is to give substance to a connector for axial position adjusting and retaining of modular elements of telescopic poles particularly suitable for practicing sports, leisure and similar, which presents a simple and intuitive use for any user. It is a further purpose of the invention to make available a connector for axial position adjusting and retaining of modular elements of telescopic poles particularly suitable for practicing sports, leisure and similar which provides assembly operations easier than those ones of equivalent known connectors.

It is a last but not last purpose of the invention to develop a connector for axial position adjusting and retaining of modular elements of telescopic poles particularly suitable for practicing sports, leisure and similar which preserves the integrity of its own functional capacity for a time longer than the connectors of the prior art, in particular avoiding the risk of accidental but definitive separation of the fixed part belonging to it.

Said purposes are achieved through a connector for axial position adjusting and retaining of modular elements of telescopic poles particularly suitable for practicing sports, leisure and similar, according to claim 1 attached hereto.

Further technical features of detail of the connector for axial position adjusting and retaining of modular elements of telescopic poles particularly suitable for practicing sports, leisure and similar are contained in the corresponding dependent claims.

Subject of the invention is also a telescopic pole, particularly suitable for practicing sports, leisure and similar, comprising the aforesaid connector, as claimed in the attached claim 15, as still hereinafter referred for the sake of exhibition brevity.

Advantageously, the connector of the present invention is of simple construction and requires no relevant assembly operation, since it includes only two pieces as operative components.

Still advantageously, the invention allows to standardize the production of a connector for axial position adjusting and retaining of modular elements of telescopic poles particularly suitable for practicing sports, leisure and similar, generating high economies of scale that lead to an increase in production efficiency and, therefore, to cost savings compared to the known art.

Equally advantageously, the present invention determines a reduction over the prior art in the number of article codes which form a connector, and which must be managed at stock, with the obvious benefits in terms of logistics and management that derive therefrom. Again advantageously, the present invention facilitates the maintenance of both the connector and, by return, of the telescopic pole, particularly suitable for practicing sports, leisure and similar, which it is applied with.

Moreover, advantageously, the user does not risk to lose some pieces and, therefore, to find in an impervious environment with unusable instruments, when the connector and/or the relative telescopic pole is disassembled for any reason and/or subjected to maintenance: this is thanks to the fact that the tubular reference body of the connector of the invention remains stably coupled with one of the modular elements of the telescopic pole, while the remaining part of the connector of the invention - the movable outer slider - is a single piece which can be easily handled for maintenance and which can be hardly lost.

Still advantageously, wear of the components of the connector of the present invention is reduced, being the operative interaction among them minimal.

In advantageous way, also, the connector of the invention avoids the risk of accidental detachment of the tubular reference body during handle by the user of the movable slider in order to place the elastically yielding means in the working position in which the modular elements are stably connected together.

This thanks to the presence, in the invention, of the locking means associated at least partly with the tubular reference body and suitable to at least limit rash movement of relative rotation of the tubular reference body with respect to the outer slider around the linear symmetry axis when the outer slider itself places the elastically yielding means in the aforesaid working position, allowing it to firmly keep the modular elements in the use position reached.

In advantageous manner, furthermore, the telescopic pole object of the invention, using the connector of the invention, is able to bear with extreme effectively the loads applied with its own body by the user for example while practicing sports, leisure, hiking and similar: laboratory tests conducted by the applicant have shown that the telescopic pole of the invention retains its structural and functional integrity even in the face of an applied load of at least 50 Kg, technical aspect that significantly and positively differentiates it from the conventional connectors of the prior art.

Said purposes and advantages, as well as others that will emerge hereinafter, will appear greatly from the description that follows, relating to preferred embodiments of the adjusting connector and telescopic pole of the invention, given by indicative and illustrative, but not limitative, way with reference to the accompanying drawings, in which:
- figure 1 is a truncated side view of the connector of the invention in application conditions, coupled with the two modular elements to be connected;
- figure 2 is a plan view of the connector of figure 1 in release conditions;
- figure 3 is a partial assonometric view of figure 1, without one of the two modular elements to be connected;
- figure 4 is a partly in cross section assonometric view of a constructive detail of the connector of figure 1;o
- figures 5 and 6 are two distinct and simplified schematic assonometric views of the coupling system of the constructive detail of figure 4 with one of the modular elements (in the description taken as the first) .

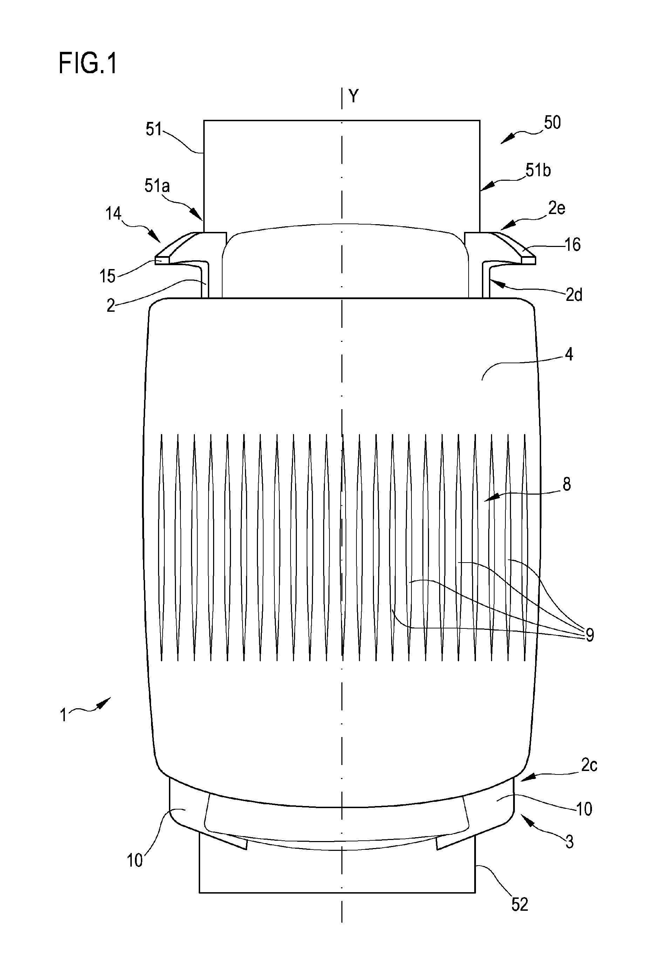

The connector for axial position adjusting and retaining of modular elements of telescopic poles, which as said is the subject of the invention, is illustrated in figure 1 where it is globally numbered with 1.

It is noted that such a connector 1 of the invention includes:
- a reference tubular body 2 defining a linear symmetry Y axis and suitable to be fixed to the first end 51a of the first modular element 51;
- elastically yielding means, on the whole indicated with 3, associated with the tubular reference body 2 and suitable to protrude from the first end 51a of the first modular element 51;
- an outer slider 4 operable by the user, which is made movable axially along the first modular element 51 and cooperates with the elastically yielding means 3 in order to place them between a working position, in which the elastically yielding means 3 are compressed by the outer slider 4 in such a way as to block the movement of the second modular element 52 with respect to said first modular element 51, and a rest position, in which the elastically yielding means 3 are released from the outer slider 4 and the second modular element 52 is free to slide with respect the second modular element 51.

In accordance with the invention, the connector 1 comprises locking means, overall indicated with 5, at least partly associated with the tubular reference body 2 and having the function of at least limit the relative rotation (not foreseen and not desirable) of the tubular reference body 2 with respect to the outer slider 4 around the linear symmetry axis Y when the outer slider 4 places the elastically yielding means 3 in the working position, thereby firmly keeping the modular elements 51 and 52 in the position reached.

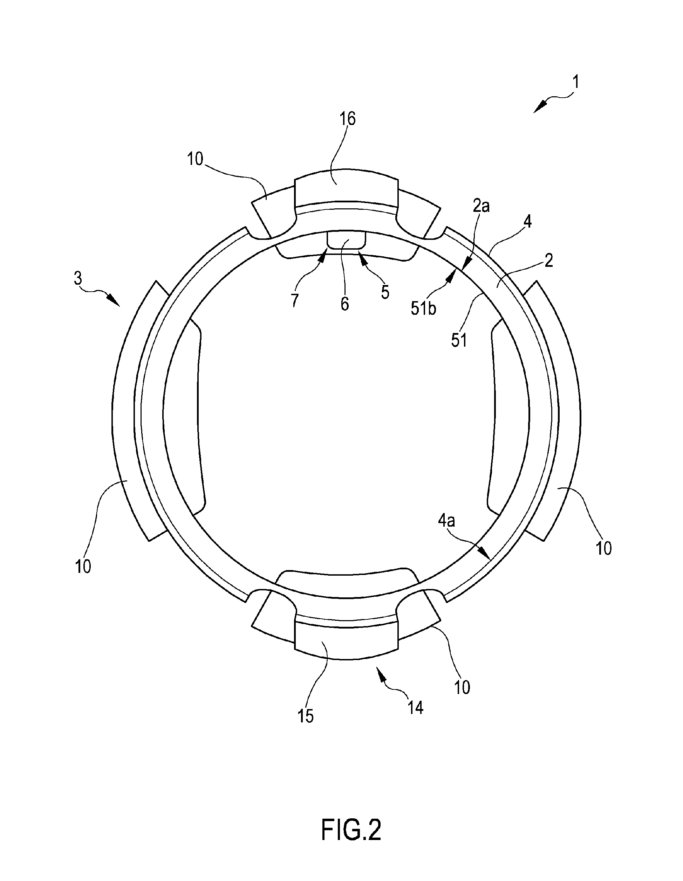

In this particular case, the locking means 5 are at least partly arranged in the inner wall 2a of the tubular reference body 2, as it is well obtained from figure 2.

Figures 2-4 show that according to the preferred embodiment described herein of the invention, the locking means 5 comprise:
- a contrast tooth 6 which protrudes from the inner wall 2a of the tubular reference body 2 remaining substantially adherent to such an inner wall 2a;
- a housing recess 7 made in the side wall 51b of the first modular element 51 and which the contrast tooth 6 is snap-engaged in.

More in detail, the contrast tooth 6 is arranged in the central zone 2b of the inner wall 2a of the tubular reference body 2 and, preferably, has a U-shaped profile.

Furthermore, the contrast tooth 6 is snap-engaged into the housing recess 7 a result of a rotation of the tubular reference body 2 around the linear symmetry axis Y.

For its part, the housing recess 7 is through in the thickness of the first modular element 51 and has a profile open towards the outside which, again preferably, has a U-shaped profile that perfectly matches the profile of the contrast tooth 6.

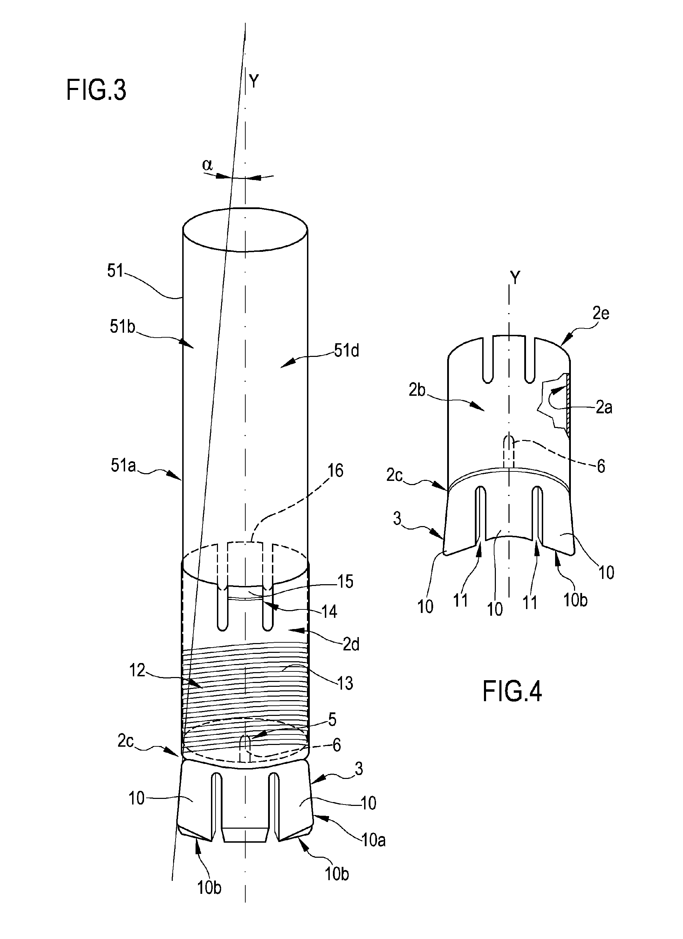

As illustrated in figures 3 and 4, the housing recess 7 protrudes axially from the side edge 51c of the first modular element 51 disposed in the first end 51a of the first modular element 51.

It is understood that in other embodiments of the connector of the invention, not illustrated in the drawings that follow, the locking means may comprise a number of contrast teeth, and of corresponding housing recesses, greater than one in order to increase the tightness of the coupling between tubular reference body and first modular element.

In a preferred but not binding way, the outer slider 4 comprises handle means, overall numbered with 8 and suitable to ease gripping and maneuvering of the outer slider 4 from the user to rotate it and make it movable axially along the aforesaid first element modular 51: the handle means 8 are constituted in this case, for example, by longitudinal ridges 9 parallely spaced apart each other on the outer surface 4a of the outer slider 4.

Preferably but not exclusively, the tubular reference body 2 is internally fixed to the first tubular element 51 through an adhesive substance, not visible and for example two-component, interposed between the inner wall 2a of the tubular reference body 2 and an end portion of the outer wall 51d of the first modular element 51.

As far as the elastically yielding means 3 are concerned, they are made of elastic plastic material and preferably in a single body with the tubular reference body 2 which the first end 2c protrudes axially with respect to.

In application conditions, the elastically yielding means 3 of the connector 1 of the invention are projecting with respect to the first end 51a of the first modular element 51, in such a way as to block the movement of the second modular element 52 with respect to the first element 51 when the outer slider 4 places the elastically yielding means 3 in the working position, and to let it slide freely when the outer slider 4 places the elastically yielding means 3 in the rest position.

In preferred but not exclusive way, the outer slider 4 is made for example of metallic material such as aluminium and has a substantially tubular shape: it is free to move along the first modular element 51, from/to the first end 51a of the latter.

In addition, the outer slider 4 has an internal shape corresponding to the outer shape of the tubular reference body 2 when the elastically yielding means 3 assume the working position. More in detail, the outer slider 4 is also capable of sliding along the tubular reference body 2, at least partly overlapping it.

As the outer slider 4 approaches the elastically yielding means 3, the elastically yielding means 3 themselves are compressed around the second modular element 52, preventing sliding thereof within the first modular element 51.

This constructive and operative arrangement provides another substantial difference of the connector for axial position adjusting and retaining 1 of the invention with respect to the connection assembly of the prior art described in the document FR 2798613 A1 in which, as mentioned before, when the user acts on the movable member by rotating it of a simple flat angle, the outer tube cooperates directly by contact with the inner tube making rigid the assembly thus formed.

As the initials figures 1 and 2 better highlight, the elastically yielding means 3 include, by way of purely preferred example, a plurality of lobes 10 (in this case four in number), separated each other by a open profile through slit 11 in such a way that the lobes 10 themselves can approach each other compressing themselves around the second modular element 52 under the pressure exerted on them by the outer slider 4.

In any case, it is preferable that the overall shape of the elastically yielding means 3 is larger than the inner one of the outer slider 4, so that the outer slider 4 gradually compresses them while the user handles it to place the elastically yielding means 3 in the working position. For example, the overall assembly of the lobes 10 of the elastically yielding means 3 presents in this case a substantially frusto-conical structure with inclination of the outer wall 10a of a first angle α with respect to the linear symmetry axis Y, while the inner shape of the outer slider 4 presents, always with respect to this linear axis Y, an inclination of the inner wall 4a of a second angle (not visible in the attached figures), greater than the first angle α: in detail, in preferred and not binding way, the first angle α assumes a value of 85° with respect to the linear symmetry axis Y of the tubular reference body 2.

Basically, therefore, each of the lobes 10 of the elastically yielding means 3 presents an outer wall 10a disposed in a plane inclined diverging outwardly from the linear symmetry axis Y defined by the tubular reference body 2: this allows the lobes 10 of the elastically yielding means 3 to be circumferentially compressed on the second modular element 52 under the action of the outer slider 4 in the phase in which the latter places the elastically yielding means 3 in the working position, providing a high mechanical retention action that allows the innovative connector 1 to connect each other in effective and stable way the modular elements 51 and 52 of the telescopic pole 50.

Preferably but not necessarily, the tubular reference body 2 presents on its outer wall 2d a linear guide 12 along which the outer slider 4 slides (rotates, in this case): for example, the linear guide 12 comprises a screw 13 made in the outer wall 2d of the tubular reference body 2, and a corresponding nut-screw, not visible, made in the inner wall 4a of the outer slider 4. More specifically, according to a preferred but non-limiting example, thread of the screw 13 and of the corresponding nut-screw presents a pitch of value between 4 mm and 6 mm - for example 5 mm - at four principles, or it presents a distance between a thread and the other equal to 1.50 mm and a profile of the thread equal to about 1.10 mm.

In the specific embodiment described, therefore, the outer slider 4 behaves like a nut-screw around the tubular reference body 2 which acts as threaded pin: by rotating the outer slider 4 in a given direction (for example clockwise), it moves vertically towards the elastically yielding means 3 associated with the tubular reference body 2, compressing it; by rotating it in the opposite direction (for instance counterclockwise), it moves vertically in the opposite direction, releasing the aforementioned elastically yielding means 3.

More precisely, the outer slider 4 is operated by the user gradually downwards along the linear guide 12, compressing the elastically yielding means 3 up to arrange them in the working position and ensure the seal on the second modular element 52.

In case the connector for axial position adjusting and retaining 1 of the invention is applied to a telescopic pole for practicing sports, leisure and similar, such a seal, indeed, is proportional to the user's weight exerting the thrust on the outer slider 4: a puny, light or weak user will be able to exert a clamping force of lower intensity, but he will also involve a lower weight to be supported for the telescopic pole, preventing it from accidentally, uncontrollably and dangerously collapsing.

On the other hand, however, a more handsome user - and who requires a telescopic pole more robust to support his own body - will be able to greatly tighten or clamp the outer slider 4: it follows that, in this case, the elastically yielding means 3 exert a greater grip on the second modular element 52.

Furthermore, since the outer slider 4 slides always remaining adherent to the modular elements 51 and 52 of the telescopic pole 50, an operation even with a possibly excessive force of such an outer slider 4 does not prevent a correct use of the pole 50 itself.

Indeed, the linear guide 10 presents first end-of-stroke means, overall indicated with 14, suitable to keep the outer slider 4 always at least partly overlapping the tubular reference body 2, so as it doesn't disperse in the environment.

In the specific case, the first end-of-stroke means 14 comprise, preferably, a pair of shaped fins 15, 16 diametrically opposite each other, clearly visible in figure 2, orthogonally outwardly projecting from the outer wall 2d of the tubular reference body 2 at its second end 2e opposite to the first end 2c in which the elastically yielding means 3 are arranged.

In particular, the shaped fins 15, 16 contrast with the terminal annular edge of the nut-screw made in the inner wall 4a of the outer slider 4, when the elastically yielding means 3 are arranged in the rest position with the purpose of releasing and make movable one relative to one another the modular elements 51 and 52 of the telescopic pole 50.

It is understood that in other optional embodiments of the connector of the invention, not represented, the first end-of-stroke means may comprise a number of shaped fins different from that one indicated above, this number being able to vary freely, depending on the constructive choices, starting from one.

It remains, also, understood that further alternative embodiments of the connector of the invention, not shown in the attached drawings, may provide that the first end-of-stroke means may be structurally different from those ones described above: for example, these first end-of-stroke means may be at least partly made, in natural and spontaneous way, by its own pressure with which the user stably couples the outer slider with the elastically yielding means, compressing the first one on the second ones: such a pressure will be variable depending on the use conditions and the force with which the user operates the outer slider on the elastically yielding means.

In addition, the linear guide 12 presents second end-of-stroke means, not shown in the drawings that follow, which force the outer slider 4 to move only within the ends 2e and 2c of the tubular reference body 2.

In this manner, an excessive thrust of the outer slider 4 toward the first end 51a of the first modular element 51 is prevented, thrust that might cause the impossibility to unlock the telescopic pole 50 at a later time, or even, in the worst case, a breakage of the same. Furthermore, in the area of the tubular reference body 2 between the screw 13 and elastically yielding means 3, the tubular reference body 2 itself presents an annular groove, not shown, suitable to receive a seal that prevents the entry of water inside the connector 1 of the invention and of the modular elements 51 and 52 connected by it.

In an advantageous but merely preferred way, the lobes 10 of the elastically yielding means 3 of the connector 1 of the invention present a convex lateral edge 10b: this design feature allows to increase the capacity of mechanical seal that the elastically yielding means 3 exert on the second modular element 52 when they take the working position.

As already mentioned, integral part of the present invention is also a telescopic pole, especially suitable for practicing sports, leisure, hiking and similar, for the sake of simplicity only partly depicted in the accompanying figures where it is globally numbered with 50. Such telescopic pole 50 comprises a first modular element 51 and a second modular element 52 slidingly and telescopically coupled with the first modular element 51 in such a way as to protrude axially from a first end 51a of the first modular element 51.

More specifically, the second tubular modular element 52 presents a diameter smaller than the diameter of the first tubular modular element 51 in such a way as to be positioned inside the latter and come out from it at least partly at its first end 51a.

Furthermore, the aforesaid telescopic pole 50 comprises the connector 1 of the type described above both in constructive terms and functional terms and which, according to the main innovative concept here expressed and claimed, includes the locking means 5 associated at least partly with the tubular reference body 2 and suit to at least limit the accidental and rash relative rotation of the tubular reference body 2 with respect to the outer slider 4 around the linear symmetry axis Y when the outer slider 4 places the elastically yielding means 3 in the working position, thus firmly keeping the modular elements 51, 52 in the position reached. Preferably, the first modular element 51 and the second modular element 52 which are mutually connected by the connector 1 of the present invention are both tubular and have suitably the outer surface satin (with rough effect) in order to increase the capacity of retention or mechanical seal on them by, in particular, the outer slider 4.

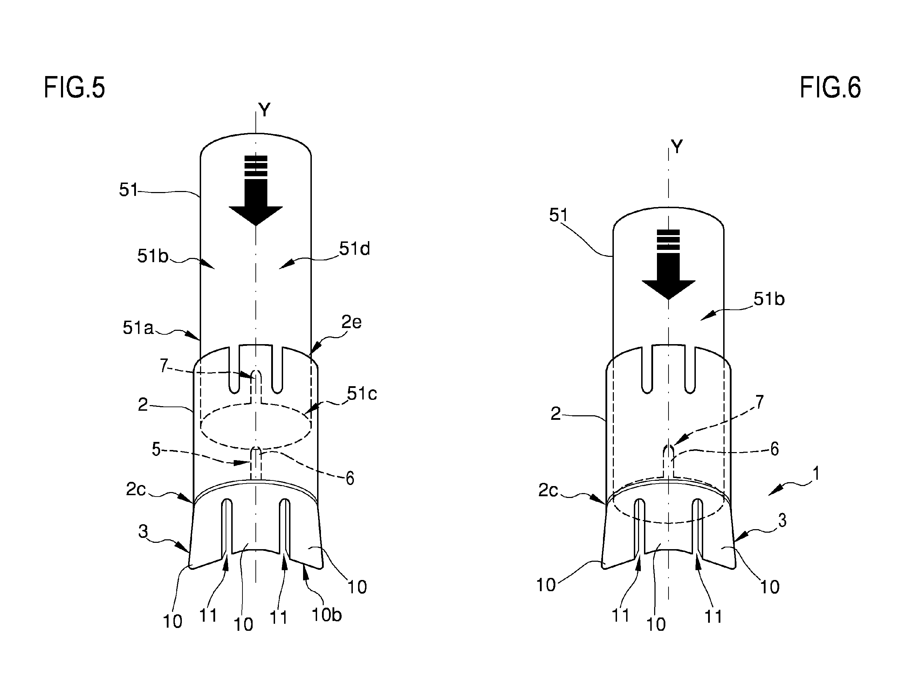

The modular elements 51 and 52 are machined with extreme mechanical precision and, therefore, with minimal tolerances, of the order of 4 tenths of a millimetre, just permitted by the particular connector for axial position adjusting and retaining 1 of the invention, applied externally to them, and not obtainable with equivalent connectors of the prior art. Operatively, during assembly at the manufacturer's factory, the operator applies the adhesive substance, for example of polyurethane-based two-component type, to the inner wall 2a of the tubular reference body 2 and/or the outer wall 51d of the first modular element 51 and, as illustrated by the arrow in figure 5, axially inserts the latter inside the tubular reference body 2itself, leaving, however, that, when the insertion is completed, the elastically yielding means 3 remain axially protruding from the constructive assembly thus obtained. Immediately after the insertion of the first modular element 51 into the tubular reference body 2, while the adhesive substance is still progressively solidifying, the operator rotates the tubular reference body 2 until the contrast tooth 6 is inserted into the housing recess 7. As shown schematically in figure 6, the tubular reference body 2 is thus stably locked in position, a fortiori, in this case, once the phase of complete solidification of the adhesive substance (the duration of which is typically, although not necessarily, of about 24 hours): therefore, the locking means 5 firmly keep the tubular reference body 2 fixed in the correct position, averting its otherwise reckless and harmful relative rotation, when the end user actuates in rotation, even with an energetic force, the outer slider 4 in order to place the elastically yielding means 3 in the working position and, in return, tighten each other the modular elements 51 and 52 of the telescopic pole 50.

On the basis of the foregoing, it is therefore understood, that the connector for axial position adjusting and retaining of modular elements of telescopic poles, particularly suitable for practicing sports, leisure and similar, as well as the telescopic pole using such a connector, both object of the present invention, achieve the purposes and reach the advantages mentioned above.

The locking means with which is particularly and mainly provided the connector for axial position adjusting and retaining of the invention allow to effectively and efficiently prevent or at least limit the relative rotation of the tubular reference body with respect to the outer slider around the linear symmetry axis when the slider itself, handled by the user, places the elastically yielding means in the working position, stably keeping the modular elements in the position reached, contrary to what occurs in the connection devices of the prior art documents FR2798613 A1 and US4,922,577 which lack of real locking means able to operate with such a relative anti-rotation functionality between the fixed tubular reference body and the movable outer slider.

Advantageously, the connector of the invention works in total absence of screws external to the two main components, the tubular reference body and the outer slider, with the obvious consequent advantages in terms of safety for the user.

In execution phase, changes could be made to the connector of the present invention consisting, for example, in locking means having a constructive conception different from that one described above with the aid of the attached drawings.

Moreover, other embodiments of the connector here claimed, not shown in the attached tables, may exist which provide elastically yielding means different from those ones defined during the patent text, which does not affect the advantage brought by the present invention. In addition, in further embodiments of the invention, yet not shown in the figures that follow, the telescopic pole, particularly suitable for practicing sports, leisure, hiking and similar may include any number of modular elements and higher than two: in such a case, the number of connectors of these modular elements will vary accordingly.

It is, finally, clear that several other changes could be made to the connector and telescopic pole concerned, without departing from the principle of novelty intrinsic in the inventive idea expressed herein, as it is clear that, in the practical implementation of the invention, materials, shapes and sizes of the illustrated details could be changed, as needed, and replaced with others technically equivalent.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Connector (1) for axial position adjusting and retaining of modular elements (51, 52) of telescopic poles (50) especially suitable for practicing sports, leisure activities and the like, wherein said modular elements (51, 52) are slidingly and telescopically coupled each other in such a way that a second of said modular elements (51, 52) protrudes axially from a first end (51a) of a first of said modular elements (51, 52) adjacent to it, said connector (1) including:
- a tubular reference body (2) defining a linear symmetry axis (Y) and suitable to be fixed to said first end (51a) of said first modular element (51);
- elastically yielding means (3), associated with said tubular reference body (2) and suitable to protrude from said first end (51a) of said first modular element (51);
- an outer slider (4) operable by the user, suitable to be made movable axially along said first modular element (51) and cooperating with said elastically yielding means (3) in order to place them between a working position, in which said elastically yielding means (3) are compressed by said outer slider (4) in such a way as to block the movement of said second modular element (52) with respect to said first modular element (51), and a rest position, in which said elastically yielding means (3) are released from said outer slider (4) and said second modular element (52) is free to slide with respect to said second modular element (51),
**characterized in that** it comprises blocking means (5) associated at least in part to said tubular reference body (2) and suitable to at least limit the relative rotation of said tubular reference body (2) with respect to said outer slider (4) around said linear symmetry axis (Y) when said outer slider (4) places said elastically yielding means (3) in said working position, firmly keeping said modular elements (51, 52) in the position reached.

2. Connector (1) according to claim 1) **characterized in that** said tubular reference body (2) is fixed internally to said first tubular element (51) by means of an adhesive substance interposed between the inner wall (2a) of said tubular reference body (2) and an end portion of the outer wall (51b) of said first modular element (51).

3. Connector (1) according to claim 1) or 2) **characterized in that** said locking means (5) are at least partly arranged in the inner wall (2a) of said tubular reference body (2).

4. Connector (1) according to any of the preceding claims **characterized in that** said locking means (5) comprise:
- at least one contrast tooth (6) which protrudes from the inner wall (2a) of said tubular reference body (2) remaining substantially adherent to said inner wall (2a);
- at least one housing recess (7) made in the side wall (51b) of said first modular element (51) and which said contrast tooth (6) is snap-engaged in.

5. Connector (1) according to claim 4) **characterized in that** said contrast tooth (6) is arranged in the central zone (2b) of said inner wall (2a) of said tubular reference body (2).

6. Connector (1) according to claim 4) or 5) **characterized in that** said contrast tooth (6) engages in said housing recess (7) following a rotation of said tubular reference body (2) around said linear symmetry axis (Y).

7. Connector (1) according to any of the claims from 4) to 6) **characterized in that** said housing recess (7) is made through in the thickness of said first modular element (51) and has a profile open outwardly.

8. Connector (1) according to any of the claims from 4) to 7) **characterized in that** said housing recess (7) develops axially from the side edge (51c) of said first modular element (51) disposed in said first end (51a) of said first modular element (51).

9. Connector (1) according to any of the preceding claims **characterized in that** said outer slider (4) comprises handle means (8) suitable to ease gripping and maneuvering of said outer slider (4) by said user to make it movable axially along said first modular element (51).

10. Connector (1) according to any of the preceding claims **characterized in that** said elastically yielding means (3) comprise a plurality of lobes (10), separated each other by at least one open profile through slit (11), in such a way that, in said working position, said lobes (10) approach each other, compressing themselves around said second modular element (52).

11. Connector (1) according to claim 10) **characterized in that** each of said lobes (10) presents a convex lateral edge (10b) suitable to increase the capability of mechanical seal that said elastically yielding means (3) exert on said second modular element (52) when they take said working position.

12. Connector (1) according to any of the preceding claims **characterized in that** the outer wall (2d) of said tubular reference body (2) includes a linear guide (12) along which said outer slider (4) slides.

13. Connector (1) according to claim 12) **characterized in that** said linear guide (12) presents first end-of-stroke means (13) to retain said outer slider (4) at least partly overlapping to said tubular reference body (2).

14. Connector (1) according to claim 12) or 13) **characterized in that** said linear guide (12) presents second end-of-stroke means suitable to force said outer slider (4) to move only within the ends (2c, 2e) of said tubular reference body (2).

15. Telescopic pole (50), particularly suitable for practicing sports, leisure activities and the like, comprising at least:
- a first modular element (51);
- a second modular element (52) slidingly and telescopically coupled with said first modular element (51) in such a way as to protrude axially from a first end (51a) of said first modular element (51);
- a connector (1) for axial position adjusting and for retaining of said first modular element (51) and said second modular element (52), comprising:
• a tubular reference body (2) defining a linear symmetry axis (Y) and fixed to said first end (51a) of said first modular element (51);
• elastically yielding means (3), associated with said tubular reference body (2) and projecting from said first end (51a) of said first modular element (51);
• an outer slider (4) operable by the user, suitable to be made movable axially along said first modular element (51) and cooperating with said elastically yielding means (3) in order to place them between a working position, in which said elastically yielding means (3) are compressed by said outer slider (4) in such a way as to block the movement of said second modular element (52) with respect to said first modular element (51), and a rest position, in which said elastically yielding means (3) are released from said outer slide (4) and said second modular element (52) is free to slide with respect to said first modular element (51),
**characterized in that** said connector (1) includes locking means (5) associated at least in part to said tubular reference body (2) and suitable to at least limit the relative rotation of said tubular reference body (2) with respect to said outer slider (4) around said linear symmetry axis (Y) when said outer slider (4) places said elastically yielding means (3) in said working position, firmly keeping said modular elements (51, 52) in the position reached.
